Europäisches Patentamt

European Patent Office

Office européen des brevets

(19)

(11) Numéro de publication: **0 292 373**
**A1**

(12) **DEMANDE DE BREVET EUROPEEN**

(21) Numéro de dépôt: **88401187.5**

(22) Date de dépôt: **17.05.88**

(51) Int. Cl.⁴: **B 60 H 1/00**
**F 01 P 3/20**

(30) Priorité: **21.05.87 FR 8707158**

(43) Date de publication de la demande:
**23.11.88 Bulletin 88/47**

(84) Etats contractants désignés: **DE ES GB IT SE**

(71) Demandeur: **VALEO**
**64 Avenue de la Grande Armée**
**F-75017 Paris (FR)**

(72) Inventeur: **Robin, Roger**
**7, Clos du Gandouget des Elancourtines**
**F-78190 Elancourt (FR)**

**Somme, Jean-François**
**9, rue des Capucines**
**F-92370 Chaville (FR)**

**Bouvot, Jean-François**
**2, rue des Grands-Prés Le Mesnil Sévin**
**F-78720 Dampierre (FR)**

(54) **Installation de chauffage pour véhicule automobile comportant un générateur de chaleur.**

(57) Installation de chauffage pour véhicule automobile comportant un circuit de circulation pour le fluide de refroidissement du moteur (10) du véhicule, ce circuit comprenant une boucle de chauffage principale (51) reliée au moteur (10) et parcourue en permanence par le liquide de refroidissement et une boucle de chauffage secondaire (55) qui comprend un échangeur de chaleur (56) propre à chauffer de l'air à envoyer dans l'habitacle du véhicule et un générateur de chaleur (58) et qui est propre à être isolée de la boucle de chauffage principale (51) pour accélérer la montée en température du fluide dans l'échangeur de chaleur (56).

FIG. 2

EP 0 292 373 A1

## Description

### Installation de chauffage pour véhicule automobile comportant un générateur de chaleur.

L'invention concerne une installation de chauffage pour véhicule automobile comportant un générateur de chaleur.

On connaît déjà des installations de chauffage pour véhicules automobiles dans lesquelles on utilise directement la chaleur du fluide de refroidissement du moteur qui circule en circuit fermé et qui s'échauffe par l'énergie thermique engendrée par le fonctionnement du moteur.

Le circuit de circulation du fluide de refroidissement comprend, de façon en soi connue, une partie sur laquelle est monté un échangeur de chaleur servant de radiateur de refroidissement et une partie sur laquelle est monté un échangeur de chaleur servant de radiateur de chauffage.

Le radiateur de refroidissement est destiné à être traversé par de l'air frais pour refroidir le liquide de refroidissement. Habituellement, une vanne à commande thermostatique est prévue pour que le fluide de refroidissement ne traverse le radiateur de refroidissement que lorsque la température de ce fluide est supérieure à un certain seuil. En dessous de ce seuil, le fluide de refroidissement passe à travers une conduite de dérivation, sans traverser le radiateur de refroidissement.

Le radiateur de chauffage est destiné à être traversé par de l'air frais pour le réchauffer et l'envoyer à l'intérieur de l'habitacle du véhicule. Ce radiateur de chauffage bénéficie ainsi des pertes thermiques du moteur.

Pour que l'installation de chauffage puisse fonctionner efficacement, il est nécessaire que le fluide de refroidissement du moteur soit suffisamment échauffé pour céder de la chaleur à l'air qui traverse le radiateur de chauffage.

Or, un tel échauffement est particulièrment long à réaliser par temps froid et notamment au cours de la phase de démarrage du moteur, d'autant plus que l'inertie des masses à chauffer, eau plus moteur, est grande et peut n'être jamais réalisé dans des conditions extrêmes, telles que celles obtenues par des moteurs à rendement amélioré, du type adiabatique.

Cet inconvénient a tendance à s'accroître avec les moteurs modernes dont le rendement est optimisé et dont les pertes calorifiques sont réduites le plus possible.

Pour tenter de remédier à cet inconvénient, on a proposé de monter, dans le circuit du fluide de refroidissement, un générateur de chaleur propre à fournir un chauffage d'appoint à l'habitacle du véhicule et/ou à entretenir une température de fonctionnement suffisante du moteur, même au ralenti.

Des générateurs de chaleur appropriés sont décrits, par exemple, dans les Demandes de Brevets français Nos 85 11 596, 85 11 597, 85 11 598, 85 19 286 et 86 01 456 au nom de la Demanderesse.

Dans les installations de chauffage de ce genre, le générateur de chaleur est propre à fournir un complément de chaleur au fluide de refroidissement du moteur afin de faciliter la montée en température de ce fluide et, par conséquent, le chauffage de l'air frais à introduire dans l'habitacle du véhicule.

Cependant, ces installations connues présentent un autre inconvénient en ce sens que la chaleur produite par le générateur de chaleur sert en grande partie à chauffer la totalité du liquide de refroidissement et à chauffer la masse du moteur, c'est-à-dire à chauffer un ensemble représentant une inertie thermique importante.

Dans ces conditions et tant que la température de cet ensemble n'a pas atteint un certain seuil, seule une partie de la chaleur produite par le générateur de chaleur est apportée au radiateur de chauffage, et cela pendant un temps d'autant plus long que la masse à chauffer présente une inertie thermique élevée.

L'invention vise notamment à éviter les inconvénients des installations de chauffage de la technique antérieure comportant un générateur de chaleur.

L'invention propose, à cet effet, une installation de chauffage pour véhicule automobile, comportant un circuit de circulation pour le fluide de refroidissement du moteur du véhicule, ce circuit comprenant un échangeur de chaleur parcouru par le fluide de refroidissement et propre à réchauffer de l'air à envoyer dans l'habitacle du véhicule, ainsi qu'un générateur de chaleur lié au fonctionnement du moteur du véhicule et propre à élever la température du liquide de refroidissement dans le circuit.

Selon une caractéristique essentielle de l'invention, ce circuit comprend une boucle de chauffage principale reliée au moteur et parcourue en permanence par le fluide de refroidissement et une boucle de chauffage secondaire qui comprend l'échangeur de chaleur et le générateur de chaleur et qui est propre à être isolée de la boucle de chauffage principale pour accélérer la montée en température du fluide dans l'é changeur de chaleur.

L'échangeur de chaleur servant de radiateur de chauffage et le générateur de chaleur sont ainsi montés dans une boucle de chauffage secondaire qui peut être isolée de la boucle de chauffage principale et qui possède par conséquent une faible inertie thermique. De ce fait, la montée en température du fluide dans la boucle de chauffage secondaire s'effectue beaucoup plus rapidement que dans le reste du circuit de circulation du fluide de refroidissement et notamment dans la boucle de chauffage principale de ce circuit.

Dans une première forme de réalisation de l'invention, la boucle de chauffage secondaire est reliée à la boucle de chauffage principale par l'intermédiaire d'une vanne propre à prendre deux positions différentes, une première position dans laquelle la boucle de chauffage secondaire est isolée de la boucle de chauffage principale et une deuxième position dans laquelle la boucle de chauffage secondaire est en communication avec la boucle de chauffage principale et alimentée en fluide par cette dernière.

Dans cette forme de réalisation, la boucle de chauffage secondaire est reliée à la boucle de chauffage principale uniquement par la vanne précitée, cette dernière étant montée entre la boucle de chauffage principale et la boucle de chauffage secondaire, en sorte que, dans la deuxième position de la vanne, le fluide circule successivement dans une première partie de la boucle de chauffage principale, à travers la vanne, dans toute la boucle de chauffage secondaire, à nouveau à travers la vanne et ensuite à travers la deuxième partie de la boucle de chauffage principale.

Dans la première position de la vanne précitée, la boucle de chauffage secondaire se comporte comme un circuit indépendant à faible inertie thermique dans laquelle la montée en température du fluide s'effectue très rapidement.

Dans la deuxième position de la vanne précitée, la boucle de chauffage secondaire est alimentée par la boucle de chauffage principale et, par conséquent, l'échangeur de chaleur servant au chauffage de l'air de l'habitacle bénéficie alors de la puissance thermique du moteur.

Dans une deuxième forme de réalisation de l'invention, dans laquelle la boucle de chauffage secondaire est également reliée à la boucle de chauffage principale par l'intermédiaire d'une vanne propre à prendre deux positions différentes comme indiqué précédemment, un échangeur de chaleur est également prévu dans la boucle de chauffage principale.

Selon une caractéristique avantageuse, l'échangeur de chaleur de la boucle de chauffage principale est situé en amont de l'échangeur de chaleur de la boucle de chauffage secondaire, par rapport au flux d'air à réchauffer, celui-ci traversant ainsi successivement l'échangeur de chaleur de la boucle de chauffage principale et l'échangeur de chaleur de la boucle de chauffage secondaire.

De ce fait, l'air qui traverse l'échangeur de chaleur de la boucle de chauffage secondaire a déjà été préchauffé par l'échangeur de chaleur de la boucle de chauffage principale, ce qui permet d'accroître la température de l'air chaud introduit dans l'habitacle.

De préférence, la boucle de chauffage principale comporte, en amont de son échangeur de chaleur, une conduite de dérivation qui alimente la vanne, cette dernière communiquant avec la boucle de chauffage secondaire et en amont de l'échangeur de chaleur de cette boucle. Ainsi, dans la première position de la vanne, le fluide circulant dans la boucle de chauffage principale alimente seulement l'échangeur de chaleur de cette boucle et, dans la deuxième position de la vanne, le fluide circulant dans la boucle de chauffage principale alimente à la fois l'échangeur de chaleur de la boucle de chauffage principale et l'échangeur de chaleur de la boucle de chauffage secondaire, et ce par l'intermédiaire de la conduite de dérivation.

Dans une première variante de cette forme de réalisation, l'échangeur de chaleur de la boucle de chauffage principale et l'échangeur de chaleur de la boucle de chauffage secondaire débouchent en aval sur une conduite unique qui est commune à la boucle de chauffage principale et à la boucle de chauffage secondaire.

Dans une autre variante, l'échangeur de chaleur de la boucle de chauffage principale et l'échangeur de chaleur de la boucle de chauffage secondaire débouchent en aval sur deux conduites de sortie différentes qui font partie respectivement de la boucle de chauffage principale et de la boucle de chauffage secondaire et qui sont reliées entre elles par une conduite de raccordement, qui peut être pourvue d'une vanne permettant la liaison entre celle-ci.

Dans une troisième forme de réalisation de l'invention, la boucle de chauffage principale et la boucle de chauffage secondaire sont en permanence isolées et un échangeur de chaleur est également prévu dans la boucle de chauffage principale.

Conformément à une autre caractéristique de l'invention, un dispositif d'expansion de fluide relie la boucle de chauffage secondaire à la boucle de chauffage principale, la circulation du fluide dans la boucle de chauffage principale et dans la boucle de chauffage secondaire se faisant toujours d'une manière isolée. De même, il peut être prévu un dispositif distinct de la boucle, soit un vase d'expansion raccordé à celle-ci, soit que le générateur de chaleur comporte lui-même un dispositif d'expansion.

Dans une variante de réalisation, l'échangeur de chaleur de la boucle de chauffage principale et l'échangeur de chaleur de la boucle de chauffage secondaire sont accolés ou font partie d'un ensemble monobloc d'échange de chaleur.

Dans une autre variante de réalisation, l'échangeur de chaleur de la boucle de chauffage principale et l'échangeur de chaleur de la boucle de chauffage secondaire sont séparés.

Dans la description qui suit, faite à titre d'exemple, on se réfère aux dessins annexés, sur lesquels:

- la figure 1 est une représentation schématique d'une installation de chauffage pour véhicule automobile, comprenant un échangeur de chaleur, conformément à la technique antérieure;

- la figure 2 est une représentation schématique d'une installation de chauffage pour véhicule automobile selon une première forme de réalisation de l'invention et dans une première phase de fonctionnement;

- la figure 3 est une représentation schématique de l'installation de chauffage de la figure 2 dans une deuxième phase de fonctionnement;

- la figure 4 est une représentation schématique d'une installation de chauffage pour véhicule automobile, conformément à une deuxième forme de réalisation de l'invention et dans une première phase de fonctionnement;

- la figure 5 est une représentation schématique de l'installation de chauffage de la figure 4 dans une deuxième phase de fonctionnement;

- la figure 6 est une représentation schématique d'une autre installation de chauffage selon l'invention dans une variante de cette deuxième forme de réalisation;

- la figure 7 est une représentation schématique d'une installation de chauffage selon une troisième forme de réalisa tion de l'invention; et

- la figure 8 est une variante de réalisation de l'installation de la figure 7.

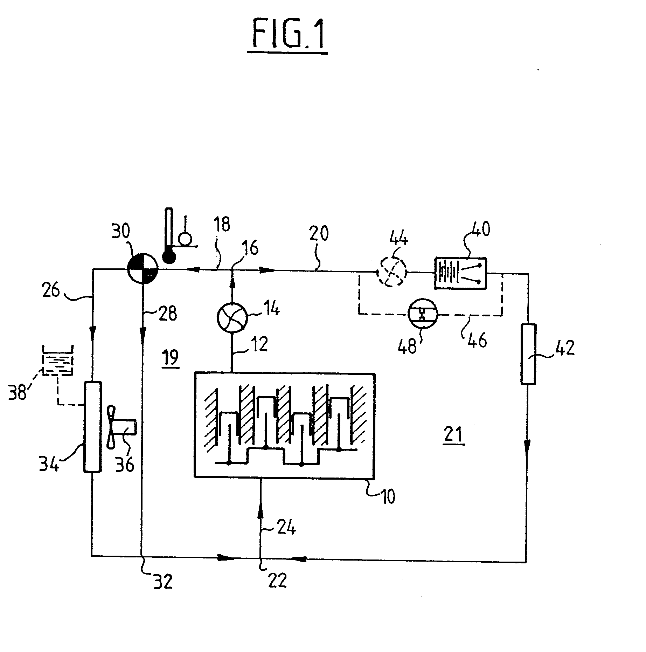

L'installation de chauffage conforme à la technique antérieure, telle que représentée à la figure 1, utilise la chaleur engendrée par le fonctionnement d'un moteur à combustion interne 10 d'un véhicule automobile. En sortie du moteur est raccordée une conduite de sortie 12, sur laquelle peut être montée une pompe à eau 14, et se raccordant, en un point 16, à deux branches 18 et 20 qui se raccordent en un point 22 à une conduite d'entrée 24 reliée à l'entrée du moteur 10. L'ensemble formé par la conduite 12, les branches 18 et 20 et la conduite 24 constitue un circuit de circulation pour le fluide de refroidissement du moteur, ce fluide pouvant être constitué par exemple par un mélange d'eau et de glycol, et circulant dans le circuit dans le sens indiqué par les flèches, sous l'action de la pompe à eau 14.

La branche 18 ou "branche de refroidissement" se divise en deux conduits 26 et 28 dont les entrées sont commandées par une vanne 30 à commande thermostatique et dont les sorties se raccordent en un point 32 de la branche 18. Sur la branche 26 est monté en série un échangeur de chaleur 34 servant de radiateur de refroidissement, auquel est associé un groupe moto-ventilateur 36, ce radiateur comportant facultativement un vase d'expansion 38. L'ensemble ainsi formé constitue "la boucle de refroidissement" 19.

Sur la branche 20 ou "branche de chauffage" est monté un échangeur de chaleur 42 servant de radiateur de chauffage pour réchauffer de l'air frais prélevé à l'extérieur de l'habitacle du véhicule et à introduire à l'intérieur de cet habitacle. L'ensemble ainsi formé constitue "la boucle de chauffage principale" 21. C'est sur cette boucle qu'est monté un générateur 40 qui peut être situé soit en amont soit en aval de l'échangeur de chaleur 42 par rapport au sens de circulation du fluide dans la boucle 21, ici en amont. De façon facultative, et comme montré en trait interrompu sur la figure 1, une pompe à eau 44 peut être prévue immédiatement soit en amont soit en aval du générateur 40. En outre, on peut prévoir, de façon facultative, un circuit de dérivation ou "by-pass" 46 comportant un orifice calibré 48, de manière à permettre au fluide de passer par cette conduite de dérivation dans le cas où la perte de charge à travers le générateur 40 deviendrait trop élevée.

L'installation telle que représentée à la figure 1 fonctionne de la façon suivante :

Après démarrage du moteur à froid, le fluide de refroidissement du moteur circule, sous l'action de la pompe à eau 14 et éventuellement de la pompe à eau facultative 44, dans le circuit de refroidissement dans le sens indiqué par les flèches. Dans une première phase de fonctionnement, dans laquelle la température du fluide de refroidissement est inférieure à un seuil prédéterminé, la vanne 30 est dans une position telle que le fluide circulant dans la branche 18 passe seulement à travers la conduite 28, sans passer à travers la conduite 26 et l'échangeur de chaleur 34, et cela de manière à favoriser la montée en température du moteur et du fluide de refroidissement. Au cours de cette même phase de fonctionnement, le générateur 40 fonctionne pour assurer un appoint de chaleur au fluide de refroidissement circulant à travers la totalité du circuit.

Lorsque la température du fluide de refroidissement atteint la valeur de seuil précitée, la vanne 30 prend une deuxième position dans laquelle l'accès à la conduite 28 est fermé et l'accès à la conduite 26 est ouvert. Dans cette deuxième phase de fonctionnement, le fluide de refroidissement circulant dans la branche 18 passe donc seulement à travers la conduite 26 et l'échangeur de chaleur 34, sans passer par la conduite de dérivation 28. Dans cette deuxième phase de fonctionnement, le générateur de chaleur 40 est en principe arrêté puisque le fluide a atteint une température suffisamment élevée pour assurer le chauffage de l'air par l'échangeur de chaleur 42.

Comme indiqué précédemment, cette installation connue a notamment pour inconvénient que le générateur de chaleur 40, lorsqu'il est en fonctionnement, assure le chauffage de la totalité du fluide de refroidissement et également le chauffage du moteur, c'est-à-dire un ensemble présentant une inertie thermique élevée. De ce fait, l'échangeur de chaleur 42 ne bénéficie que d'une partie de la chaleur produite par le générateur 40.

L'invention vise à éviter un tel inconvénient en proposant une installation de chauffage du type précité dans laquelle la chaleur engendrée par le générateur de chaleur est récupérée intégralement par l'échangeur de chaleur servant au chauffage de l'air à envoyer dans l'habitacle.

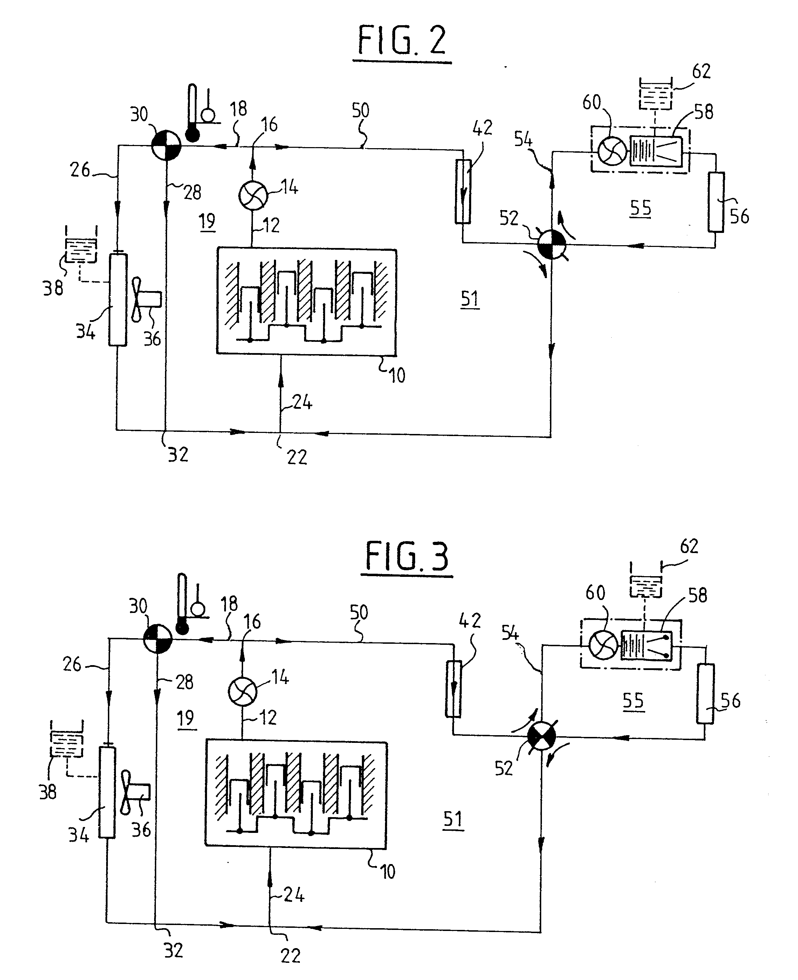

Dans les installations conformes à l'invention qui vont être décrites maintenant en référence aux figures 2 à 8, on retrouve certains éléments communs avec l'installation de la technique antérieure qui vient d'être décrite en référence à la figure 1. Ces éléments communs qui concernent essentiellement le moteur et le circuit du fluide de refroidissement, sont désignés par les mêmes références numériques.

On se réfère tout d'abord aux figures 2 et 3. Dans cette forme de réalisation, la partie du circuit du fluide de refroidissement qui est affectée au chauffage de l'habitacle comprend une branche de circulation principale 50 qui est reliée au moteur 10, l'entrée de la branche 50 étant reliée au point de raccordement 16 et sa sortie étant reliée au point de raccordement 22. Cette branche 50 est parcourue en permanence par le fluide de refroidissement lorsque le moteur 10 et la pompe à eau 14 fonctionnent. C'est sur cette branche de circulation 50 qu'est monté un échangeur de cha leur 42. L'ensemble ainsi formé constitue la boucle de chauffage principale 51.

La boucle 51 est reliée par l'intermédiaire d'une vanne à quatre voies 52 à une branche de circulation 54 surlaquelle sont montés un échangeur de chaleur 56 propre à chauffer l'air à envoyer dans l'habitacle du véhicule automobile, un générateur de chaleur 58, une pompe à eau 60 qui peut être montée soit en amont soit en aval du générateur 58, ce dernier pouvant être situé également soit en amont soit en aval de l'échangeur 56, par rapport au sens de la circulation du fluide comme indiqué par les flèches. L'ensemble ainsi formé constitue la boucle de chauffage secondaire 55. La boucle 55 peut comporter facultativement son propre vase d'expansion 62, comme représenté en trait interrompu, ou un dispositif d'expansion de fluide tel que, par exemple, un orifice calibré dans la vanne 52 permettant un écoulement minime du fluide entre la boucle 51 et la boucle 55 lors de l'expansion du fluide dans la boucle.

La vanne 52 est propre à prendre deux positions différentes: une première position (figure 2) dans laquelle la boucle 55 est isolée de la boucle 51 et une deuxième position (figure 3) dans laquelle la boucle 55 est en communication avec la boucle 51 et alimentée en fluide par cette dernière.

Dans la forme de réalisation des figures 2 et 3, la boucle 55 est reliée à la boucle 51 uniquement par la vanne 52, cette dernière étant montée entre la boucle 51 et la boucle 55.

Lorsque la vanne est dans la position représentée à la figure 2, la circulation du fluide dans la boucle 55 est totalement indépendante de la circulation du fluide dans la boucle 51.

Lorsque la vanne 52 est dans la position représentée à la figure 3, le fluide circule successivement dans une première partie de la boucle 51 qui est comprise entre le point 16 et la vanne 52, à travers la vanne 52, dans toute la boucle 55, à nouveau à travers la vanne 52 et ensuite à travers la deuxième partie de la boucle 51 qui s'étend entre la vanne 52 et le point de raccordement 22.

Lorsque la vanne 52 est dans la position représentée à la figure 2, la montée en température du fluide de refroidissement qui circule dans la boucle 55 et par conséquent dans l'échangeur de chaleur 56 se fait beaucoup plus rapidement que la montée en température du fluide de refroidissement qui circule dans tout le reste du circuit et notamment dans la boucle 51.

Une logique de commande (non représentée) est prévue pour piloter la vanne 52 en fonction notamment de la température du fluide. Il est à noter que la commande de la vanne 52 n'est pas nécessairement liée à celle de la vanne à commande thermostatique 30 étant donné qu'il peut être intéressant de commuter la vanne 52 de la position de la figure 2 à celle de la figure 3 indépendamment de la vanne thermostatique 30, par exemple si cette vanne 30 est dans une position telle que le fluide de refroidissement passe par la conduite de dérivation 28.

De même, il peut être prévu que l'échangeur 42 soit absent dans la boucle de chauffage principale lorsque la chaleur produite par le générateur est suffisante pour chauffer l'habitacle.

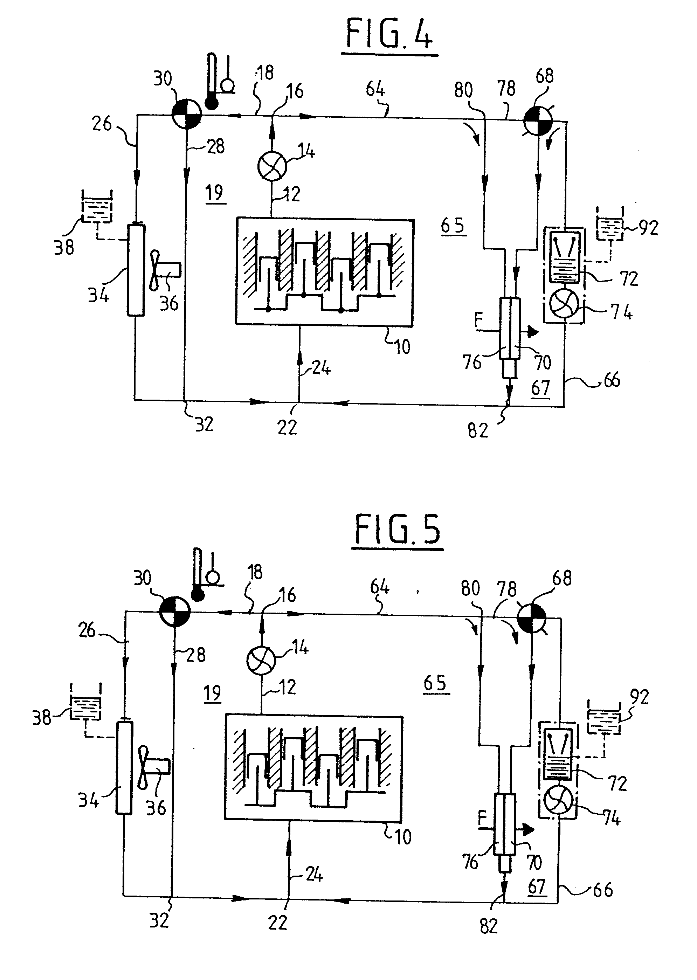

On se réfère maintenant aux figures 4 et 5. Dans cette forme de réalisation, la partie du circuit affectée au chauffage de l'habitacle du véhicule automobile comprend également une boucle de chauffage principale 65 reliée au moteur 10 et parcourue en permanence par le fluide de refroidissement et une boucle de chauffage secondaire 67 propre à être isolée de la boucle 65. La boucle 65 comprend une branche de circulation 64 reliée à son entrée au point de raccordement 16 et à sa sortie au point de raccordement 22.

La boucle 67 comprend une branche de circulation 66 reliée à la boucle 65 par l'intermédiaire d'une vanne 68 et elle comprend un échangeur de chaleur 70 servant au chauffage de l'habitacle du véhicule automobile, ainsi qu'un générateur de chaleur 72 auquel est associée une pompe à eau 74. Comme montré aux figures 4 et 5, l'échangeur de chaleur 70 est situé en aval de la vanne 68 et en amont du générateur de chaleur 72, par rapport au sens de circulation du fluide dans la boucle 66 comme indiqué par les flèches.

Dans la forme de réalisation des figures 4 et 5, un échangeur de chaleur 76 est également prévu dans la boucle de chauffage principale 65. L'échangeur de chaleur 76 est situé immédiatement en amont de l'échangeur de chaleur 70 par rapport au flux d'air à réchauffer, celui-ci traversant successivement l'échangeur de chaleur 76 et l'échangeur de chaleur 70 comme représenté par la flèche F. Les échangeurs 76 et 70 peuvent être constitués par deux échangeurs qui sont accolés l'un contre l'autre ou par les deux nappes d'un même échangeur.

La boucle de chauffage principale 65 comporte, en amont de son échangeur de chaleur 76, une conduite de dérivation 78 qui alimente la vanne 68. L'entrée de cette conduite 78 est reliée en un point de raccordement 80 sur la branche 64 et sa sortie est reliée à la vanne 68, cette dernière étant montée en série dans la boucle 67 et en amont de l'échangeur de chaleur 70.

Les échangeurs de chaleur 70 et 76 débouchent en aval sur une conduite unique 82 qui est commune à la branche 64 et à la boucle 67.

La vanne 68 peut prendre deux positions différentes : une première position (figure 4) dans laquelle la boucle 67 est isolée de la boucle 65 et une deuxième position (figure 5) dans laquelle la boucle 67 est en communication avec la boucle 65 et alimentée en fluide par cette dernière.

Dans la position de la figure 4, la sortie de la conduite 78 est fermée par la vanne 68 et le fluide circulant dans la boucle 65 alimente seulement l'échangeur de chaleur 76. Dans la position de la figure 5, la sortie de la conduite 78 est en communication avec la boucle 67. Par conséquent, le fluide circulant dans la boucle 65 alimente à la fois l'échangeur de chaleur 76 et l'échangeur de chaleur 78. Dans ce cas, le générateur 72 et la pompe 74 sont arrêtés. Le fluide qui s'écoule alors par la conduite 82 regagne le moteur 10.

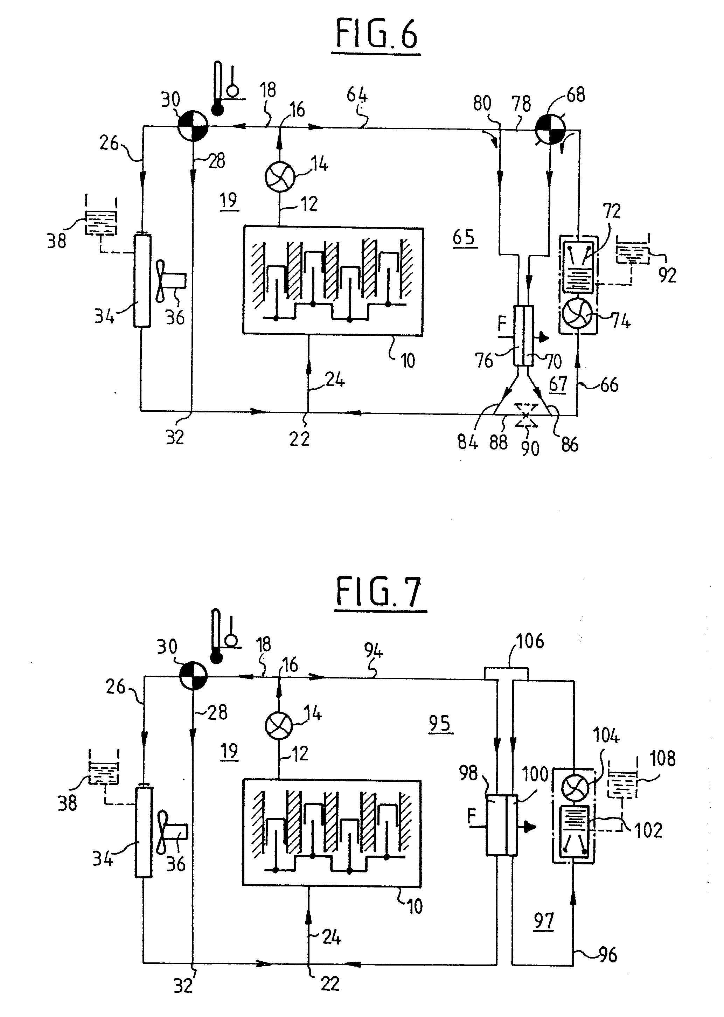

On se réfère maintenant à la figure 6 qui constitue une variante de l'installation représentée à la figure 4. Dans cette forme de réalisation, l'échangeur de chaleur 76 de la boucle 65 et l'échangeur de chaleur 70 de la boucle 67 débouchent en aval sur deux conduites de sortie différentes 84 et 86 qui font partie respectivement de la boucle 65 et de la boucle 67. Les conduites 84 et 86 sont reliées entre elles par une conduite de raccordement 88 en formant un circuit en triangle, la conduite 88 assurant ainsi la liaison entre la boucle 66 et la branche 64.

Une vanne 90 à deux voies peut être montée sur la conduite de raccordement 88 et est propre à prendre deux positions différentes : une position de fermeture dans laquelle la conduite 84 et la conduite 86 sont isolées et une position d'ouverture dans laquelle la conduite 84 et la conduite 86 sont en communication par l'intermédiaire de la conduite de raccordement 88.

La vanne 90 est avantageusement commandée en synchronisme avec la vanne 68 de manière que ces deux vannes puissent simultanément isoler ou au contraire mettre en communication la conduite 84 et la conduite 86.

L'installation conforme à la figure 6 fonctionne de la même façon que celle des figures 4 et 5.

On se réfère maintenant à la figure 7. Dans cette forme de réalisation, le circuit de circulation de fluide affecté au chauffage de l'habitacle du véhicule comprend également une boucle de chauffage principale 95 reliée au moteur 10 et parcourue en permanence par le fluide de refroidissement et une boucle de chauffage secondaire 97. La boucle 95 comprend une branche de circulation 94 reliée aux points de raccordement 16 et 22 et comprend un échangeur de chaleur 98. La boucle 97 comprend une branche de circulation 96, un échangeur de chaleur 100 et un générateur de chaleur 102 auquel est accouplée une pompe à eau 104. Dans cette forme de réalisation, la boucle 95 et la boucle 97 sont en permanence isolées. Un conduit 106 d'expansion de fluide est toutefois relié à la boucle 95 et à la boucle 97. Mais il peut être envisagé de prévoir un vase d'expansion 108 en supprimant ledit conduit.

L'échangeur de chaleur 98 est d'une capacité suffisante pour assurer à lui seul le chauffage de l'habitacle dans les conditions usuelles. L'échangeur de chaleur 98 est situé en amont de l'échangeur de chaleur 100 par rapport au sens de circulation de l'air à réchauffer, comme représenté par la flèche F.

L'installation de la figure 7 comprend une logique de commande (non représentée) qui assure notamment la mise en marche et l'arrêt du générateur de chaleur 102. Ce générateur de chaleur est mis en marche tant que la température du fluide de refroidissement qui passe dans l'échangeur 98 est insuffisante pour assurer le chauffage de l'air à envoyer dans l'habitacle. Pendant toute cette phase de fonctionnement, l'air est préchauffé par l'échangeur de chaleur 98 et est ensuite chauffé par l'échangeur de chaleur 100 qui bénéficie de la chaleur qui lui est communiquée par le générateur de chaleur 102. Lorsque la température du fluide qui circule à travers l'échangeur 98 est suffisante pour assurer le chauffage de l'air à envoyer dans l'habitacle, le générateur 102 peut alors être stoppé.

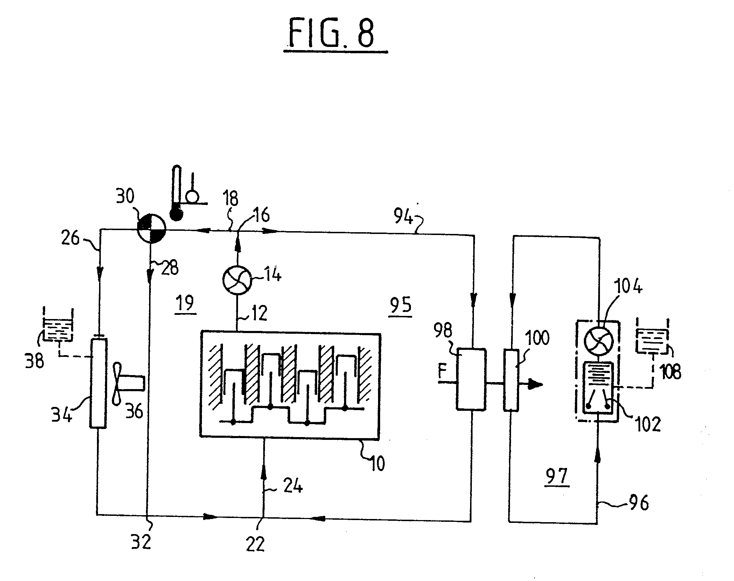

On se réfère maintenant à la figure 8 qui concerne une variante de réalisation de l'installation selon la figure 7. Conformément à cette variante, la boucle 97 est totalement découplée de la boucle 95. Les deux échangeurs de chaleur 98 et 100, au lieu d'être accolés l'un contre l'autre comme dans le cas de la figure 7, sont totalement séparés et peuvent être situés à une certaine distance l'un de l'autre pour tenir compte, par exemple, de la configuration particulière du véhicule automobile considéré. L'installation de la figure 8 fonctionne de la même façon que celle de la figure 7.

Conformément à l'invention, le générateur de chaleur utilisé est un générateur lié au fonctionnement du moteur du véhicule et qui peut notamment transformer une partie de l'énergie mécanique du moteur en chaleur, ou bien récupérer directement de la chaleur produite en même temps que cette énergie mécanique du moteur ou encore récupérer directement de la chaleur sur l'échappement du moteur.

**Revendications**

1. Installation de chauffage pour véhicule automobile, comportant un circuit de circulation pour le fluide de refroidissement du moteur du véhicule, ce circuit comprenant un échangeur de chaleur parcouru par le fluide de refroidissement et propre à réchauffer de l'air à envoyer dans l'habitacle du véhicule, ainsi qu'un générateur de chaleur lié au fonctionnement du moteur du véhicule et propre à élever la température du liquide de refroidissement dans le circuit, caractérisée en ce que ce circuit comprend une boucle de chauffage principale (51; 65; 95) reliée au moteur (10) et parcourue en permanence par le fluide de refroidissement et une boucle de chauffage secondaire (55; 67; 97) qui comprend l'échangeur de chaleur (56; 70; 100) et le générateur de chaleur (58; 72; 102) et qui est propre à être isolée de la boucle de chauffage principale pour accélérer la montée en température du fluide dans l'échangeur de chaleur (56; 70; 100).

2. Installation selon la revendication 1, caractérisée en ce que la boucle de chauffage secondaire (55; 67) est reliée à la boucle de chauffage principale (51; 65) par l'intermédiaire d'une vanne (52; 68) propre à prendre deux positions différentes, une première position dans laquelle la boucle de chauffage secondaire est isolée de la boucle de chauffage principale et une deuxième position dans laquelle la boucle de chauffage secondaire est en communication avec la boucle de chauffage principale et alimentée en fluide par cette dernière.

3. Installation selon la revendication 2, caractérisée en ce que la boucle de chauffage secondaire (55) est reliée à la branche de chauffage principale (51) uniquement par la vanne (52), cette dernière étant montée entre la boucle de chauffage principale et la boucle de chauffage secondaire en sorte que, dans la deuxième position de la vanne, le fluide circule successivement dans une première partie de la boucle de chauffage principale (51), à travers la vanne (52), dans la boucle de chauffage secondaire (55), à nouveau à travers la vanne (52), et ensuite à travers la deuxième partie de la boucle de chauffage principale (51).

4. Installation selon la revendication 2, caractérisée en ce qu'un échangeur de chaleur (42; 76) est également prévu dans la boucle de chauffage principale (51; 65).

5. Installation selon la revendication 4, caractérisée en ce que l'échangeur de chaleur (42; 76) de la boucle de chauffage principale (51; 65) est situé en amont de l'échangeur de chaleur (56; 76) de la boucle (55; 67) par rapport au flux d'air à réchauffer, celui-ci traversant ainsi successivement l'échangeur de chaleur (42; 76) de la boucle de chauffage principale et l'échangeur de chaleur (56; 70) de la boucle de chauffage secondaire.

6. Installation selon l'une des revendications 4 et 5, caractérisée en ce que la boucle de chauffage principale (65) comporte, en amont de son échangeur de chaleur (76), une conduite de dérivation (78) qui alimente la vanne (68), cette dernière étant montée en série avec la boucle de chauffage secondaire et en amont de l'échangeur de chaleur de la boucle de chauffage secondaire, en sorte que, dans la première position de la vanne (68), le fluide circulant dans la boucle de chauffage principale (65) alimente seulement l'échangeur de chaleur (76) de cette boucle et que, dans la deuxième position de la vanne, le fluide circulant dans la boucle de chauffage principale (65) alimente à la fois l'échangeur de chaleur (76) de cette boucle et l'échangeur de chaleur (70) de la boucle de chauffage secondaire.

8. Installation selon la revendication 6, caractérisée en ce que l'échangeur de chaleur (76) de la boucle de chauffage principale (65) et l'échangeur de chaleur (70) de la boucle de chauffage secondaire (67) débouchent en aval sur deux conduites de sortie différentes (84, 86) qui font partie respectivement de la boucle de chauffage principale et de la boucle de chauffage secondaire et qui sont reliées entre elles par une conduite de raccordement (88).

9. Installation selon la revendication 8, caractérisée en ce qu'une vanne (90) à deux voies est montée sur la conduite de raccordement (88), cette vanne (90) pouvant prendre deux positions différentes, une position de fermeture dans laquelle la boucle (65) et la boucle (67) sont isolées et une position d'ouverture dans laquelle ces boucles sont en communication par l'intermédiaire de la conduite de raccordement (88).

10. Installation selon la revendication 1, caractérisée en ce que la boucle de chauffage principale (95) et la boucle de chauffage secondaire (97) sont en permanence isolées et en ce qu'un échangeur de chaleur (98) est également prévu dans la boucle de chauffage principale (95).

11. Installation selon la revendication 10, caractérisée en ce que l'échangeur de chaleur (98) de la boucle de chauffage principale (95) est situé en amont de l'échangeur de chaleur (100) de la boucle de chauffage secondaire (97), par rapport au sens de circulation de l'air à réchauffer.

12. Installation selon l'une des revendications précédentes, caractérisée en ce qu'un dispositif d'expansion de fluide est relié à la boucle de chauffage principale (51, 65, 95) et à la boucle de chauffage secondaire (55, 67, 97).

13. Installation selon l'une des revendications 10 à 12, caractérisée en ce que l'échangeur de chaleur (98) de la boucle de chauffage principale (95) et l'échangeur de chaleur (100) de la boucle de chauffage secondaire (97) sont accolés l'un contre l'autre.

14. Installation selon l'une des revendications 10 à 12, caractérisée en ce que l'échangeur de chaleur (98) de la boucle de chauffage principale (95) et l'échangeur de chaleur (100) de la boucle de chauffage secondaire (97) sont séparés.

15. Installation selon l'une des revendications précédentes, caractérisée en ce que la boucle de chauffage principale (55, 67, 97) comprend son propre vase d'expansion.

16. Installation selon l'une des revendications 1 à 15, caractérisée en ce que la boucle de chauffage principale (55; 67; 97) comprend sa propre pompe de circulation (60; 74; 104).

0292373

# FIG.1

0292373

FIG. 2

FIG. 3

## FIG.4

## FIG.5

0292373

## FIG.6

## FIG.7

0292373

# FIG. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 506 040  (J. MERZ) <br> * Page 5, paragraphe 2 - page 8, en entier; figures 1,2 * <br> --- | 1,10,11 ,13,14, 16 | B 60 H    1/00 <br> F 01 P    3/20 |
| D,A | EP-A-0 210 930  (VALEO) <br> * Page 4, paragraphe 2; figure 1 * <br> --- | 1,10,11 ,13,16 | |
| A | US-A-4 394 960  (NISSAN) <br> * Colonne 2, ligne 56 - colonne 4, ligne 47; figures 2,3 * <br> --- | 1,12,16 | |
| D,A P | EP-A-0 233 811  (VALEO) <br> * Page 1, lignes 1-24; figure 1 * <br> --- | 1,12,16 | |
| A | DE-A-3 401 207  (DEUTZ) <br> * Page 9, ligne 26 - page 10, paragraphe 1; figures 1,2 * <br> --- | 1,2,4,5 ,13 | |
| A | DE-A-2 710 766  (SEICO) <br> * Page 9, paragraphes 2,3; figures * <br> --- | 1,12,15 | |
| A | FR-A-1 076 361  (THOMPSON) <br> * Page 2, colonne de droite, ligne 51 - page 3, colonne de droite, ligne 21; figures 1-3 * <br> ----- | 1-3 | **DOMAINES TECHNIQUES RECHERCHES (Int. Cl.4)** <br><br> B 60 H <br> F 01 P |

Le présent rapport a été établi pour toutes les revendications

| Lieu de la recherche | Date d'achèvement de la recherche | Examinateur |
|---|---|---|
| LA HAYE | 08-08-1988 | LINTZ C.H. |

EPO FORM 1503 03.82 (P0402)